# EUROPEAN PATENT APPLICATION

(11) **EP 3 106 353 A1**
(43) Date of publication of application: **21.12.2016**
(21) Application number: 15275155.8
(22) Date of filing: 17.06.2015
(51) Int. Cl.: B60R 13/10

(54) **TAMPER-EVIDENT VEHICLE REGISTRATION PLATE**

(71) Applicant: Bestplate Limited, London WC2B 5AH (GB)
(72) Inventor: McNamee, Tony, Blackpool, Lancashire FY4 3EF (GB)
(74) Representative: Wilson Gunn

(57) **Abstract**

A tamper-evident vehicle registration plate comprises an opaque sheet (3) and a transparent plate (1), one of which has a printable surface upon which readable indicia (7) are printed to form a printed surface, and the other of which forms an opposing surface that faces the printed surface. A first portion of the printed surface is adhesively bonded to the opposing surface, while a second portion of the printed surface is less adherent than the first portion to the opposing surface. Adhesion of the printed indicia to the printable surface is weaker than the adhesion between said first portion and opposing surface.

## Description

### Technical Field of the Invention

The present invention relates to tamper-evident vehicle registration plates.

### Background to the Invention

Vehicle registration plates that are forcibly removed from a vehicle may be used illegally to conceal the identity of another vehicle or fraudulently sold to motorists by whom the registration plates will be unusable. It is therefore desirable that a stolen registration plate should be rendered unusable, both to discourage theft of the plates and to prevent the illegal use of stolen plates. Furthermore, once a plate has been forcibly removed from the vehicle, or broken in the attempt and partially removed, the vehicle's registration number may be wholly or partially missing, so that the vehicle is difficult for passing pedestrians or motorists to identify and report.

Objects of embodiments of the present invention include the provision of a vehicle registration plate that overcomes the above problems, that is rendered unusable when its forced removal from a vehicle is attempted, that substantially displays the registration number in a legible form on both a forcibly removed part and a residual part that remains on the vehicle, that defaces or removes at least a portion of the registration number from one or both ofthe forcibly removed part and the residual part, that provides a visual warning that the plate has been tampered with, and/or that dissuades potential thieves from attempting to force the registration plate from the vehicle.

### Summary of the Invention

According to a first aspect of the invention, there is provided a tamper-evident vehicle registration plate comprising an opaque sheet and a transparent plate, one of which comprises a printable surface upon which readable indicia are printed to form a printed surface, and the other of which comprises an opposing surface that faces said printed surface; wherein a first portion of the printed surface is adhesively bonded to the opposing surface, a second portion of the printed surface is less adherent than the first portion to the opposing surface, and adhesion of the printed indicia to the printable surface is weaker than the adhesion between said first portion and opposing surface.

The first portion may include at least part of the printed indicia, and the adhesion of the printed indicia to the printable surface may be weaker than the adhesion between the opposing surface and the printed indicia within said first portion. The first portion may include at least part of the printable surface.

The second portion may include at least part of the printed indicia, and the adhesion between the opposing surface and the printed indicia within said second portion may be weaker than the adhesion of the printed indicia to the printable surface. The second portion may include at least part of the printable surface, and may be substantially non-adherent to the opposing surface.

The registration plate may comprise a release layer interposed between the opposing surface and the second portion of the printed surface. The shape of the second portion may be substantially defined by that of the release layer. The release layer may comprise a surface to which the adhesive layer is weakly adherent or non-adherent, may comprise a polymer film, may comprise a polymer film coated on one or both sides, and may comprise a coating on one of said printed surface and said opposing surface. The release layer may comprise a PTFE-based, silicone-based, oil-based, or wax-based substance, may comprise a release agent, and may comprise a thermal transfer film. The release layer may be transparent.

The registration plate may comprise an adhesive layer interposed between the opposing surface and the first portion of the printed surface. The adhesive layer may be interposed between the opposing surface and the second portion of the printed surface. The release layer may be interposed between the printed surface and the adhesive layer, or may be interposed between the opposing surface and the adhesive layer.

The opaque sheet may comprise said printable surface, the transparent plate comprising said opposing surface.

At least part of the printed indicia may be better adhered to the printable surface than to the opposing surface, and may remain substantially adhered to the printable surface when the transparent plate and opaque sheet are forcibly separated from one another. At least part ofthe printed indicia may be better adhered to the opposing surface than to the printable surface, and may remain substantially adhered to the opposing surface when the transparent plate and opaque sheet are forcibly separated from one another.

The registration plate may comprise a backing adhesive for affixing the registration plate to a mounting plate or a surface of a vehicle. The opaque sheet may be better adhered to the backing adhesive than to the transparent plate. The backing adhesive may have a greater adhesive strength than the adhesive layer, may cover a surface area that exceeds that of said first portion, and may extend further than said first portion.

The shape of the first portion may have a shape substantially defined by that of the adhesive layer. The adhesive layer may comprise one or more discontinuities, which may comprise a gap in the adhesive, or a weakened or perforated region of the adhesive. The second portion may have a shape substantially matching that of said one or more discontinuities.

One of said first and second portions may surround the other said portion. The first and second portions may be substantially contiguous with one another, and may together comprise substantially the whole of the printed surface. The registration plate may comprise interspersed regions of the first and second portions, which may form a repeating pattern.

A boundary between the first and second portions may define a visually recognisable shape, such as a word, a logo, or a simple geometric shape, and such a boundary may define a text-based, symbolic, or graphical warning that theft ortampering has occurred. The or at least one said boundary may be substantially defined by the shape of the release layer, may be substantially defined by the shape ofthe adhesive layer, and may be substantially defined by the shape of the one or more discontinuities in the adhesive layer.

According to a second aspect of the invention, there is provided a motor vehicle comprising a registration plate according to any preceding claim, wherein the opaque sheet is adhered more securely to the vehicle than to the transparent plate.

According to a third aspect of the invention, there is provided a method of fabricating a tamper-evident vehicle registration plate, the method comprising the steps of:
providing an opaque sheet and a transparent plate, one of which comprises a printable surface upon which readable indicia are printed to form a printed surface;
adhesively bonding a first portion of the printed surface to an opposing surface of the other of said opaque sheet and transparent plate to achieve a stronger adhesive bond between said first portion and opposing surface than between the printed indicia and printable surface; and
limiting adhesion of a second portion of the printed surface to the opposing surface.

Adhesively bonding the first portion may include adhesively bonding at least part of the printed indicia within the first portion to the opposing surface, which may include providing an adhesive bond that exceeds the strength of adhesion achieved between the printed indicia and the printable surface.

Limiting adhesion of the second portion may include limiting adhesion to the opposing surface of at least part of the printed indicia within said second portion, which may include limiting said adhesion below the strength of adhesion achieved between the printed indicia and the printable surface. Limiting adhesion of the second portion may comprise interposing a release layer between the opposing surface and said second portion.

The fabrication method may include the step of interposing a layer of transparent adhesive between the opposing surface and the first portion of the printed surface, or between the opposing surface and each of the first and second portions of the printed surface. The method may further comprise the step of applying the release layer to the opposing surface before said adhesive layer is interposed, or the step of applying the release layer to the printed surface before said adhesive layer is interposed.

Applying the release layer may comprise printing said release layer onto one of the printed surface and the opposing surface, and may comprise printing said release layer onto at least one of the printable surface and the printed indicia. Printing the release layer may comprise a dry transfer printing, screen printing, laser printing, lithographic printing, flexographic printing, thermal transfer printing, latex printing, inkjet printing, or solid-ink printing method.

The fabrication method may include the step of printing said readable indicia onto said printable surface to form said printed surface, which may comprise a dry transfer printing, screen printing, laser printing, lithographic printing, flexographic printing, thermal transfer printing, latex printing, inkjet printing, or solid-ink printing method.

The release layer and the indicia may be printed using the same printing method, may be printed during the same printing pass, and may be thermally printed from a single thermal transfer ribbon.

The fabrication method may include the step of applying the adhesive over the release layer before said step of interposing the adhesive between the printed and opposing surfaces, and may include the step of laminating the registration plate.

Applying the release layer may comprise providing a surface to which the adhesive layer is weakly adherent or non-adherent, may comprise applying a polymer film, may comprise applying a PTFE-based, silicone-based, oil-based, or wax-based coating, may comprise applying a coating of a release agent, may comprise applying a clear varnish or lacquer coating, and may comprise applying a coating using a spray, brush, or roller.

The opaque sheet may comprise said printable surface, the transparent plate comprising said opposing surface.

### Detailed Description of the Invention

In order that the invention may be more clearly understood, embodiments thereof will now be described, by way of example only, with reference to the accompanying drawings, of which:

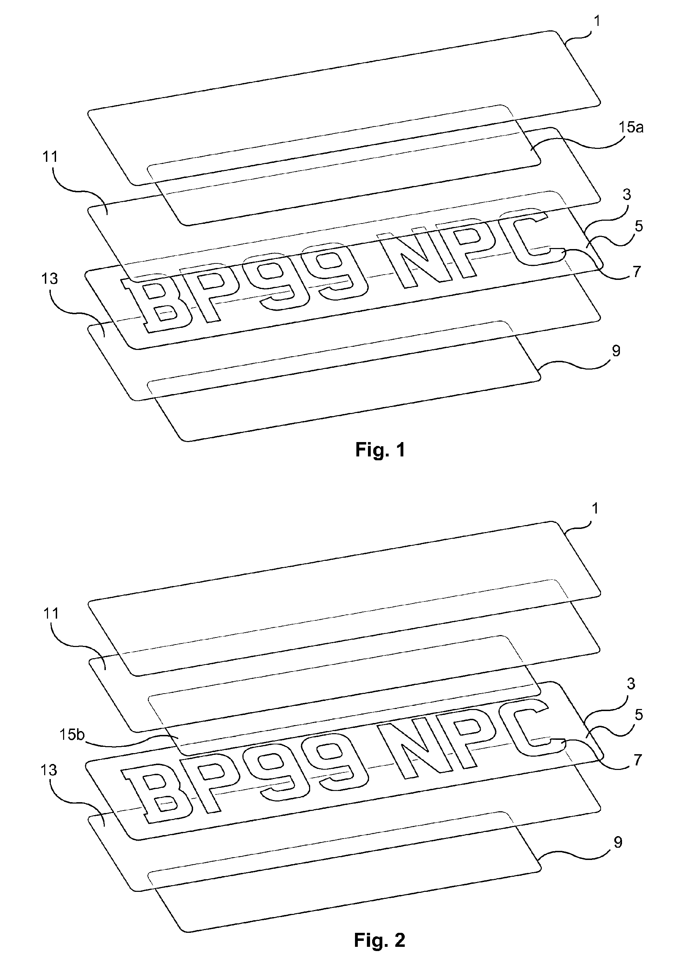

Figures 1 and 2 show exploded views of vehicle registration plates according to the present invention.

The embodiments shown schematically in exploded form in Figures 1 and 2 briefly comprise a transparent acrylic cover plate (1), an opaque printed sheet (3) that comprises a retro-reflective surface (5) with a visibly contrasting registration number (7) printed thereupon, and a backing plate (9) for mounting on the body of a vehicle. The printed retro-reflective sheet (3) is adhered to the transparent cover plate by a transparent adhesive layer (11) and to the backing plate by layer of backing adhesive (13). The cover plate (1), reflective sheet (3), transparent adhesive layer (11), and backing adhesive layer (13) each has substantially the same size and shape, being an elongate rectangular shape, and are overlaid in superposed alignment with one another.

In the arrangement shown in Figure 1, an additional masking layer (15a) is interposed between the cover plate (1) and the transparent adhesive layer (11). In the arrangement of Figure 2, a similar masking layer (15b) is instead interposed between the transparent adhesive layer (11) and the printed retro-reflective sheet (3). The purpose of the masking layer (15a, 15b) is to prevent or limit adherence, within the area of the printed sheet over which it extends, of the printed registration number to the transparent cover plate. In each case, the masking layer is substantially transparent, so that the number can be clearly viewed through the cover plate and front adhesive layer.

The front adhesive layer is sufficiently strong that it is effective to bond parts of the printed numbering to the transparent cover plate so that these parts of the printed registration number are at least partially detached from the reflective sheet when the cover plate is forcibly removed from the vehicle. Other parts of the printed numbering are covered by the masking layer which is interposed between the printed numbering and the cover plate, so that the masked parts of the registration number are either prevented from coming into contact with the adhesive layer, as in the arrangement of Figure 2, or are placed in contact only with adhesive that is prevented from coming into contact with the cover plate, as in the arrangement of Figure 1. The arrangements of Figures 1 and 2 may also be combined so that respective masking layers are placed both above and below the adhesive layer, in which case they may cover separate areas of the registration number or may wholly or partially overlap one another.

Referring in more detail to the arrangement of Figure 1, the masking layer maybe applied to the acrylic cover plate before applying the adhesive layer. In some embodiments, this may simply comprise laying a polymer film against the acrylic or adhesive before pressing the two together, so that the polymer film is trapped between the adhesive and acrylic. However, this may interfere with the visual clarity of the finished plate, so a masking layer that is bonded to, or in fluid contact with, the acrylic may be preferred, provided that the masking layer (15a)-or at least part of its thickness-can be more easily separated from the acrylic plate (1) and/or transparent adhesive (11) than the printed surface from the transparent adhesive (11).

In a preferred embodiment, this is achieved by coating a region of the acrylic plate with a release agent, such as a PTFE-based, silicone-based, wax-based, or oil-based substance, or a layer of clear resin, varnish, or lacquer, that is effective to substantially prevent the adhesive from bonding to that region. Once the acrylic plate and printed sheet are adhered together, the structure is then laminated under pressure to leave the release agent tightly encased between the adhesive and acrylic such that visual inspection through the cover plate preferably reveals no refractive artefacts such as internal voids or surfaces between the acrylic, release layer, and adhesive layer.

Such a release agent may be painted onto the acrylic surface by means of a spray or a brush, for example using a stencil. Alternatively, it may be transferred onto the acrylic by means of dry transfer printing, screen printing, flexographic printing, printing rollers, or any other suitable means. In certain preferred embodiments, the release agent is digitally printed onto the acrylic surface using ink-jet, solid ink, or thermal transfer printing technology.

In other embodiments, the masking/release layer takes the form of a thin, clear film, such as a transparent polymer film, coated with a low-tack adhesive or other weak adhesive to be placed against the acrylic plate. For example, a polyester-backed adhesive tape or film may be used. Alternatively, or in addition, the film is formed from or coated with an adhesion-resistant substance or release agent-such as a PTFE-based, silicone-based, wax-based, or oil-based substance-to be placed against the adhesive layer and effective to prevent the film from becoming strongly adhered thereto. In this latter case, the film may also be provided with an adhesive backing to be placed against the acrylic plate, although it would not then be necessary that the adhesive backing is weak or low-tack.

In one embodiment, a surface of the acrylic cover plate of Figure 1 is partially coated with a release layer by any suitable means, such as any discussed above, and then fully coated with a layer of double-sided pressure-sensitive adhesive film. The release layer is selected to prevent or limit the strength of any bond that may form, within the area over which it is applied, between the adhesive layer and each of the acrylic surface and printed lettering, so that the adhesive will break away from the acrylic when the cover plate is prised or pulled away from a vehicle on which the plate is mounted. The release layer serves both:
a. to mask the printed lettering from the opposing acrylic surface, so that the masked portion ofthe lettering is not de-bonded from the reflective surface when the acrylic cover plate is forcibly removed; and
b. to limit the overall adhesion strength bonding the acrylic plate and printed surface, so that the adhesive bond between the acrylic and reflective sheet will fail before the backing adhesive bond, leaving the reflective sheet adhered to the vehicle when the cover plate is forcibly removed.

The overall adhesion strength between the acrylic plate and reflective sheet will depend at least on the adhesive bond strength where a release layer is absent, the adhesive bond strength (or lack of adhesion) where a release layer is present, and the area and distribution ofthe release layer and the adhesive layer. For example, a strip ofrelease coating provided at an edge of the plate may help to initiate de-bonding of the adhesive from the acrylic, while a wide patch of release coating that is centrally positioned away from the edges may result in a more secure initial bond between the acrylic and the adhesive that fails more abruptly and completely once an edge of the plate is pulled free. Parameters such as the bond strength, coverage area, and distribution of the transparent adhesive, and the bond strength, coverage area, and distribution of the release layer, should therefore be carefully selected to provide a desired overall adhesion strength between the cover plate and reflective sheet, and parameters such as the bond strength, coverage area, and distribution of the backing adhesive should similarly be selected to provide a desired overall adhesion strength between the reflective sheet and mounting plate or vehicle, each of these parameters being adjustable to compensate for one another and to ensure that the reflective sheet is more securely adhered to the vehicle than to the cover plate.

Although a single layer of double-sided adhesive film is used here, the adhesive strength may also be varied to produce varying adhesion behaviour across the printed surface, such as by providing apertures in the adhesive, additives that strengthen or weaken the adhesive, or additional adhesive films with higher or lower adhesive bond strengths and/or differing cure characteristics. The additional adhesive films may be spliced together to form a single variable-strength adhesive film layer, or one adhesive film layer may be overlaid with one or more additional film layers of different sizes and, optionally, different adhesion strengths. Alternatively, one or more adhesives may be rolled, painted, or sprayed in varying quantities over all or part of the acrylic surface in order to create a desired overall adhesive bond strength and distribution of local adhesive bond strength.

A registration number is applied to the reflective panel as a dry transfer print or using any suitable print method, such as screen printing, laser printing, lithographic printing, flexographic printing, thermal transfer printing, latex printing, and inkjet printing. The registration number is printed in a colour that legibly contrasts with the reflective surface, typically black ink or any other contrasting colour where permitted or mandated in the jurisdiction where the registration plate will be used.

The reflective material is then laminated to the adhesively-coated acrylic that contains the embedded release agent or peelable film. The method of joining these components is preferably by means of pressure to ensure a good bond, such as via rollers, direct pressure, or vacuum pressure. In a preferred embodiment, the pressure is applied via pinch rollers so that air is expelled as the plate passes through the rollers.

Optionally, the reflective sheet may be divided or weakened by perforations, or by indentation or scoring to its back surface, to help initiate tearing ofthe reflective sheet during removal of the cover plate. The scoring, indentations, or perforations may fully, partially, and/or intermittently outline the registration number and/or the portion of the reflective sheet over which the release liner will be overlaid, such as to define the outline or the corners of a rectangular portion having the same or a similar size, shape, and position as the registration number or release liner, and/or to define a recognisable shape, word, or pattern. Scoring or perforations may be made using a blade, cutting forme, laser, or any suitable cutting means. Indentations may be embossed using pressure from a stamp or cutting forme, or any suitable means. The scoring, perforations, or indentations may be made to the reflective sheet before or after it is laminated to the transparent cover plate.

The back of the registration plate is then backed with a coating of double-sided adhesive film. This could be a complete coat of uniform adhesion strength or may be made up of different strengths, such as stronger adhesive around the edges and/or in the centre. For example, where a central portion of the reflective panel is scored, perforated, or indented, a stronger backing adhesive may be provided in this region. Strong backing adhesive around the edges may help to ensure that de-bonding initiates between the cover plate and reflective sheet, rather than in the backing adhesive, when the cover plate is forcibly removed, even where the backing adhesive is weaker or absent in other areas. The backing adhesive may be provided as a layer of double-sided adhesive film, tape, or foam, or as a layer of glue, and may cover all or part of the plate. A protective liner may be applied to or retained on the adhesive backing so that registration plate can be conveniently stored, handled, and transported.

The plate may then be directly adhered to a surface of a vehicle. However, to avoid damage to the paintwork during attempted theft of the plate or its subsequent removal and replacement, it is preferred that a mounting plate to which the registration plate can be adhered is secured to the vehicle. The mounting plate is a sturdy plate or frame formed from a substantially rigid material such as a metal or plastic or a composite or combination of materials. The mounting plate is securely attached to the vehicle body such as by means of rivets, screws/bolts, tamper-proof screws/bolts, or a combination of these. It must be sufficiently securely attached to the vehicle that attempting to forcibly remove the registration plate results in detachment ofthe transparent cover plate without any damage to the vehicle and without detaching the mounting plate from the vehicle.

As an alternative, or in addition, to the adhesive on the back of the plate, an adhesive may be applied on the mounting plate. This could be similarly zoned into different shapes and/or strengths to achieve a desired bond characteristic or failure mode, and may be similarly provided with a protective liner applied to or retained on the adhesive.

Any protective liner is then removed from the backing adhesive on the back ofthe registration plate and/or the front ofthe mounting plate and the registration plate is firmly pressed onto the mounting plate by hand to achieve a secure adhesive bond. Additional fixation means such as screws/bolts, tamper-resistant screws/bolts, or rivets may be used to more firmly secure the registration plate or a part of it to the mounting plate, provided that any such fasteners still permit detachment of the transparent cover plate from the reflective sheet so that the tamper-evident effect is preserved.

In the event that an attempt is made to forcibly remove the plate from the vehicle, the acrylic plate will break away from the reflective sheet, in at least the area coated with the release film, leaving at the reflective sheet wholly or partly attached to the mounting plate. Part of the registration number covered by the release film remains legibly displayed on the vehicle, while part of the number not covered by the release film remains legibly adhered to the transparent cover plate, so that each of the stolen cover plate and the remaining reflective sheet provides evidence oftampering and identifies the vehicle which has been tampered with. The perforations, scoring, or indentations-where present-may help to ensure detachment of at least the release-coated portion of the reflective sheet from the transparent plate, even where other parts of the printed sheet may fail to detach from the acrylic.

The detached acrylic cover plate cannot be misused as a false registration plate, since the registration number is defaced, at least part of it remaining on the reflective sheet attached to the vehicle. Neither can the acrylic plate be conveniently be reused to fabricate a new false registration plate, since at least part ofthe number remains securely bonded to the acrylic plate. However, the vehicle body is undamaged and the mounting plate can be unscrewed and replaced before fitting a new registration plate.

Referring in detail to the arrangement of Figure 2, the release layer is applied, by any suitable means as discussed above, to the printed surface of the reflective sheet instead of to the acrylic plate. In all other respects, the registration plate's structure, fabrication and subsequent attachment to a vehicle may be as described above for the arrangement of Figure 1. As in the arrangement of Figure 1, the masking release film of Figure 2 preferably exposes a first part of the registration number and covers a second part, so that the first part can be adhesively bonded to the acrylic plate while the second part will remain un-bonded or weakly bonded to the acrylic surface.

Any suitable substance and method of application may be used to form the release layer, as discussed above for the arrangement of Figure 1, but in this case onto the printed surface rather than the acrylic. However, in certain preferred embodiments, the release film is transferred to the printed surface as part of the same printing process used to print the registration number itself. For example, for any suitable printing technology, such as those discussed above, the transparent release film may be printed onto the reflective sheet as a second 'colour' of ink, over the top of the black ink, whether overprinted during the same pass or during a second pass. Alternatively, the release film (or a substance suitable for forming it) may be incorporated into to a thermal transfer ribbon, so that the registration number is printed with a release agent incorporated into the printed lettering. For example, a thermal transfer ribbon comprising a low-strength, adhesion-resistant, or weakly-adherent thermal ink, such as a wax-based ink, is coated with a second layer of a stronger and/or more adherent thermal transfer ink, such as wax-based, resin-based, or both. When the registration number is printed, the second ink contacts and bonds to the reflective surface while the first ink forms a weak, peelable, or adhesion-resistant release layer superficially coating the second ink. At least one of the layers of ink must be the correct colour for the registration number, i.e. typically black, although the release layer may be a substantially transparent thermal print medium. If the first layer is substantially transparent, then it may form a complete layer (i. e. intact) or an incomplete layer (i.e. containing gaps), and the second layer of black ink should be complete. If both layers are black, then either or both of the layers may be complete or incomplete.

In the arrangements shown in Figures 1 and 2, the masking/release layer takes the form of a rectangular patch which covers a substantial part of the registration number. However, a wide range of suitable formations for the release layer may be used to achieve a variety of different effects, such as:
a. any formation that wholly covers the lettering, so that the registration number remains substantially adhered to the vehicle and cannot be removed with the acrylic cover plate-this would help to prevent misuse of stolen number plates and to ensure that the vehicle registration remains readable; and
b. any formation that only partially covers the lettering, so that the covered part remains substantially adhered to the vehicle and the uncovered part remains substantially adhered to the transparent plate-this would deface the registration number visibly on both the cover plate and reflective sheet, similarly helping to prevent misuse of the stolen plate but also providing a visual warning that the plate and/or vehicle have been tampered with; including, in particular:
   i. any formation that comprises distributed release material, such as distributed shapes, distributed openings within a shape, and/or other interspersed formations, so that uncovered and covered parts of the lettering are interspersed across substantially the whole ofthe registration number-this would ensure that, although the registration number is clearly defaced on both the removed transparent cover plate and the vehicle-mounted reflective sheet, substantially the whole of its outline or general shape remains clearly readable on both surfaces; and
   ii. any formation that comprises a clearly recognisable shape, such as a simple geometric shape, symbol, or word, so that the shape (or its inverse) is revealed by a residual portion of the printed registration number on the reflective surface-this may provide a clear and recognisable shape or message that is particularly effective in drawing attention to the evidence of tampering and/or warning others that thieves are operating in the area.

In further embodiments, the registration number may be printed onto the acrylic plate or a transparent film applied thereto, rather than onto the reflective sheet. In this case, adhesion of at least part of the printed lettering to an interposed layer of adhesive is desirable to ensure that at least part of the lettering is removed from the transparent plate so that the stolen acrylic plate cannot be misused. In such embodiments, suitable formations for the release layer would include formations that partially cover the lettering, including formations that comprise distributed release material such as distributed shapes, distributed openings within a shape, and/or other interspersed formations, as discussed above, as well as:
c. any formation that leaves the lettering wholly uncovered, so the whole of the registration code remains substantially bonded by the adhesive layer to the reflective sheet when the cover plate is forcibly removed.

In any of the aforementioned embodiments, the masking layer could take the form of a rectangular shape or one or more linear strips, such as one or more parallel stripes running parallel to the elongate rectangular shape of the registration plate. This may be conveniently provided by a release film in the form of a tape, such as a non-adhesive tape, a one-sided adhesive tape, or relatively weak double-sided adhesive tape. Alternatively, it could take the form of a discontinuous dispersal of discrete spots or patches of release coating, such as would be achieved by spraying a fine mist of release agent onto the surface to be coated. In some embodiments, the release layer has a recognisable shape, such as a rectangle or any other simple geometric shape, or a word or logo, at least part ofthe shape covering at least part ofthe registration number so that an outline ofthe recognisable shape is revealed when the transparent cover plate is detached from the reflective sheet. In some embodiments, the release layer forms a repeating pattern, such as a hatched, cross-hatched, chequered, dotted, or alphanumeric repeating pattern, so that the registration number is clearly defaced in a controlled and distributed fashion when the cover plate is removed, yet its overall shape or outline remains substantially complete and readable. A combination of such formations may be provided, such as by spraying a fine mist of release coating through a stencil to define a recognisable shape, by applying a repeating pattern of release coating within a boundary defining a recognisable shape, and/or by applying a release coating in a combination of solid-filled areas and partially-filled (e.g. patterned) areas.

In other embodiments, the release layer is wholly or partially substituted by one or more apertures in the transparent adhesive layer, so that no adhesive bonding is provided within selected regions of the facing surfaces of the retro-reflective sheet and acrylic plate. For example, the apertures could be spaces between spaced strips of adhesive tape, or could be one or more shapes cut through an adhesive film before it is applied to the acrylic plate. The aperture(s) could define a recognisable shape, such as a rectangle or any other simple geometric shape, or a word or logo, at least part of the shape covering at least part of the registration number so that an outline of the recognisable shape is revealed when the transparent cover plate is detached from the reflective sheet. In some embodiments, the apertures form a repeating pattern, such as a hatched, cross-hatched, chequered, dotted, or alphanumeric repeating pattern, so that the registration number is clearly defaced in a controlled and distributed fashion when the cover plate is removed, yet its overall shape or outline remains substantially complete and readable. A combination of such formations may be provided, such as by cutting a repeating pattern of apertures through the adhesive film within a boundary that defines a recognisable shape, and/or by cutting a large aperture with a recognisable shape within or alongside an area of the adhesive perforated by a pattern of smaller apertures.

Where a release layer is present, the adhesive layer may be provided with gaps/perforations at or near an outline of the release film/coating or the registration number, to facilitate rupture of the adhesive so that it separates easily from the release coating/film when the cover registration plate is pulled apart.

In certain preferred embodiments, the reflective sheet is formed from an enclosed-lens retro-reflective sheeting material, such as those manufactured and sold under the PRECLEAR trade mark by 3M Company of Minnesota, USA, or such as the 'Engineering Grade' or 'Super Engineering Grade' branded reflective sheeting manufactured and sold under the NIKKALITE trade mark by Nippon Carbide Industries Co., Inc. of Japan. The reflective and acrylic sheets are each provided dry-faced and may be provided with or without an adhesive-coated back. The adhesives may include double-sided adhesive-coated films and/or unsupported/free adhesive films, may include acrylic-based adhesives, may include pressure-sensitive adhesives, and may include one or more of a high-tack, medium-tack, and/or low-tack adhesives such as manufactured by 3M Company of Minnesota, USA, Morgan Adhesives Company of Ohio, USA, or Technibond Limited of Buckinghamshire, UK.

The above embodiments are described by way of example only, and their features may be combined interchangeably as will be apparent to the skilled reader. Many variations are possible without departing from the scope ofthe invention as defined in the appended claims.

## Claims

1. A tamper-evident vehicle registration plate comprising an opaque sheet and a transparent plate,
one of which comprises a printable surface upon which readable indicia are printed to form a printed surface; and
the other of which comprises an opposing surface that faces said printed surface,
wherein a first portion of the printed surface is adhesively bonded to the opposing surface;
a second portion of the printed surface is less adherent than the first portion to the opposing surface; and
adhesion of the printed indicia to the printable surface is weaker than the adhesion between said first portion and opposing surface.

2. A registration plate according to claim 1 wherein the first portion includes at least part of the printed indicia, such as wherein the adhesion of the printed indicia to the printable surface is weaker than the adhesion between the opposing surface and the printed indicia within said first portion.

3. A registration plate according to any preceding claim wherein the second portion includes at least part ofthe printed indicia, such as wherein adhesion between the opposing surface and the printed indicia within said second portion is weaker than the adhesion of the printed indicia to the printable surface.

4. A registration plate according to any preceding claim comprising a release layer interposed between the opposing surface and the second portion of the printed surface, such as wherein the shape of the second portion is substantially defined by that of the release layer.

5. A registration plate according to any preceding claim comprising an adhesive layer interposed between the opposing surface and at least the first portion of the printed surface, such as wherein the shape of the first portion is substantially defined by that of the adhesive layer and/or wherein a release layer is interposed between the opposing surface and the adhesive layer or between the printed surface and the adhesive layer.

6. A registration plate according to any preceding claim wherein at least part of the printed indicia is better adhered to the printable surface than to the opposing surface, such as wherein at least part of the printed indicia remains substantially adhered to the printable surface when the transparent plate and opaque sheet are forcibly separated from one another.

7. A registration plate according to any preceding claim wherein at least part of the printed indicia is better adhered to the opposing surface than to the printable surface, such as wherein at least part of the printed indicia remains substantially adhered to the opposing surface when the transparent plate and opaque sheet are forcibly separated from one another.

8. A registration plate according to any preceding claim comprising a backing adhesive for affixing the registration plate to a mounting plate or a surface of a vehicle, such as wherein all or part of the opaque sheet is better adhered to the backing adhesive than to the transparent plate.

9. A registration plate according to any preceding claim comprising interspersed regions of the first and second portions, such as wherein the interspersed regions form a repeating pattern.

10. A registration plate according to any preceding claim wherein a boundary between the first and second portions defines a text-based, symbolic, and/or graphical warning, such as a warning that theft or tampering has occurred.

11. A vehicle comprising a registration plate according to any preceding claim wherein all or part of the opaque sheet is adhered more securely to the vehicle than to the transparent plate.

12. A method of fabricating a tamper-evident vehicle registration plate, the method comprising the steps of:
providing an opaque sheet and a transparent plate, one of which comprises a printable surface upon which readable indicia are printed to form a printed surface;
adhesively bonding a first portion of the printed surface to an opposing surface of the other of said opaque sheet and transparent plate to achieve a stronger adhesive bond between said first portion and opposing surface than between the printed indicia and printable surface; and
limiting adhesion of a second portion of the printed surface to the opposing surface.

13. A fabrication method according to claim 12 wherein adhesively bonding the first portion includes adhesively bonding at least part of the printed indicia to the opposing surface to provide an adhesive bond that exceeds the strength of adhesion achieved between the printed indicia and the printable surface.

14. A fabrication method according to claim 12 or claim 13 wherein limiting adhesion ofthe second portion includes limiting adhesionto the opposing surface of at least part of the printed indicia within said second portion, such as to less than the strength of adhesion achieved between the printed indicia and the printable surface.

15. A fabrication method according to any one of claims 12 to 14 wherein limiting adhesion ofthe second portion comprises interposing a release layer between the opposing surface and said second portion, such as applying the release layer to one of the opposing surface and the printed surface before an adhesive layer is applied thereto.
